# EUROPÄISCHE PATENTSCHRIFT

(11) **EP 1 847 750 B1**
(45) Veröffentlichungstag und Bekanntmachung des Hinweises auf die Patenterteilung: **06.06.2012**
(21) Anmeldenummer: 07105571.9
(22) Anmeldetag: 03.04.2007
(51) Int. Cl.: F16L 9/147, B32B 1/08, B32B 3/24, B32B 3/30, B32B 7/08, B32B 7/12, B32B 15/08, B32B 27/08, B32B 27/16, B32B 27/32

(54) **Verbundrohr mit verformbarer Schicht**
Composite pipe with deformable layer
Tuyau composite avec une couche déformable

(30) Priorität: 19.04.2006 DE 102006018466
(43) Veröffentlichungstag der Anmeldung: 24.10.2007
(73) Patentinhaber: VIEGA GmbH & Co. KG, 57439 Attendorn (DE)
(72) Erfinder: Hoffmann, Nils, 57439, Attendorn (DE); Aragon, Oscar Hernandez, 57392, Schmallenberg-Bad Fredeburg (DE); König, Manfred, 57439, Attendorn (DE); Koschig, Bernd, 57439, Attendorn (DE); Schmitz, Carsten, 57439, Attendorn (DE); Ahmann, Mike, 59514, Welver (DE); Heuel, Ralf, 57439, Attendorn (DE); Schneider, Andreas, 57413, Finnentrop-Schönholthausen (DE)
(74) Vertreter: Cohausz & Florack

(56) Entgegenhaltungen:
- CH-A- 277 798
- DE-A1- 19 731 580
- US-A- 5 573 039
- US-A1- 2002 007 861

## Beschreibung

Die Erfindung betrifft ein Verbundrohr, mit mindestens zwei Schichten, wobei die innere erste Schicht eine inerte Schicht ist und wobei die zweite Schicht außerhalb der ersten Schicht angeordnet ist.

Verbundrohre der vorgenannten Art sind aus dem Stand der Technik bekannt. Durch die Ausgestaltung eines Rohres als Verbundrohr können die verschiedenen Anforderungen an die Materialien eines Verbundrohres auf mindestens zwei Schichten aufgeteilt werden.

So stehen bei der inneren ersten Schicht die chemisch inerten bzw. Additivmigration verhindernden Eigenschaften im Vordergrund. Demgegenüber stehen bei der äußeren Schicht besonders die Korrosionsbeständigkeit und Widerstandsfähigkeit, beispielsweise durch die Wahl eines temperatur-, chemisch- oder elektronenstrahlvernetzten Kunststoffs, insbesondere eines Compounds im Vordergrund. Solche Kunststoffe sind in der Fachwelt respektive als PEX-A, PEX-B oder PEX-C bekannt.

Bei der Herstellung vernetzter Kunststoffe entstehen Zerfallsprodukte. Im Falle von PEX-A Kunststoffen ist dies durch die zur Vernetzung erforderlichen hohen Temperaturen bedingt, bei PEX-B Kunststoffen durch die zur Vernetzung eingesetzten chemischen Reaktionsstoffe und bei PEX-C Kunststoffen dadurch, dass durch die Elektronenbestrahlung Umwandlungsstoffe entstehen. Weiterhin werden den zuvor genannten Kunststoffen häufig höhere Stabilisatorkonzentrationen beigefügt, um Vernetzungsverluste auszugleichen. Diese Stabilisatoren bzw. Additive können ebenfalls in das im Verbundrohr geführte Medium migrieren bzw. zu Zerfallsprodukten reagieren und umgesetzt werden. Kunststoffe können beispielsweise ca. 5 % Zusatztstoffe enthalten. Es können aber auch mehr oder weniger Zusätze, abhängig von den gewünschten Eigenschaften des Kunststoffes gewählt werden.

Die erste inerte Schicht wirkt als Sperrschicht, um das im Verbundrohr geführte Medium vor einer Migration der in der zweiten Schicht vorhandenen Stoffe zu schützen.

Insbesondere wenn das im Verbundrohr geführte Medium Trinkwasser ist, kann es zu einer ungewünschten Migration der zuvor genannten Stoffe kommen.

Ein Verbundrohr gemäß dem Oberbegriff des Anspruchs 1 ist aus der DE-A-103 58 820 bekannt.

Die zuvor genannten Verbundrohre haben den Nachteil, dass sie schlechte Biegeeigenschaften aufweisen. Insbesondere knicken die Rohre sehr leicht, so dass sich der das Medium führende Querschnitt nachteilig an der Knickstelle verengt.

Der Erfindung liegt somit das technische Problem zugrunde, ein Verbundrohr anzugeben, das gegenüber dem geführten Medium inerte Eigenschaften aufweist und beim Biegen nicht frühzeitig knickt.

Erfindungsgemäß wird das technische Problem durch die im Anspruch 1 definierten Merkmale gelöst. Eine dritte verformbare Schicht ist vorgesehen und die dritte Schicht ist außerhalb der ersten Schicht angeordnet und mit der zweiten Schicht verbunden.

Somit stabilisiert bzw. stützt eine verformbare dritte Schicht beim Biegen des Verbundrohres den Querschnitt des Verbundrohres an der Biegestelle und dadurch verhindert ein frühzeitiges Knicken des Verbundrohres. .

Beim Biegen eines Verbundrohres wird der Biegeradius von seinem Ursprung auf die Mittellinie des Rohres bezogen. Üblicherweise liegen die minimalen Biegeradien zwischen dem 1,5-fachen und 5-fachen des Außendurchmessers des Verbundrohres, abhängig ob mit Biegehilfsmitteln oder von Hand gebogen wird. Wird ein erfindungsgemäßes Verbundrohr gebogen, so werden die Teile des Verbundrohres gestaucht, die innerhalb des Biegeradius liegen. Die Teile des Verbundrohres, die außerhalb des Biegeradius liegen werden entsprechend gedehnt. Die dritte verformbare Schicht kann sich dabei plastisch verformen und kompensiert so die in ihr auftretenden Spannungen durch eine Stauchung bzw. Längung. Dabei behält sie die runde Form des Verbundrohrquerschnittes weitestgehend bei. Die mit der dritten Schicht verbundenen Schichten erfahren Druck- sowie Zugbelastungen. In ihnen bauen sich Spannungen auf, die aber ein Knicken nicht bewirken können, da die spannungsbelasteten Schichten mit der dritten verformten Schicht verbunden sind.

Erfindungsgemäß ist die erste Schicht aus PSU (Polysulfon) oder PPSU (Polyphenylsulfon)hergestellt. Somit können auch Kunststoffe vorteilhaft als inerte Barriereschicht verwendet werden.

Die zweite Schicht ist aus PE (Polyethylen), PERT (PE erhöht thermisch widerstandsfähig), PEX (PE vernetzt), PP (Polypropylen), PB (Polybuten), PA (Polyamid) oder PVC (Polyvinylchlorid) in ungefüllter, gefüllter oder bewehrter Form hergestellt. Auf diese Weise lassen sich die günstigen Materialeigenschaften der genannten Kunststoffe für das Verbundrohr verwenden.

Bei einer Ausführungsform, bei der die dritte Schicht aus einem Metall, insbesondere Al, Stahl oder Kupfer hergestellt sein kann, wird die Verformbarkeit der dritten Schicht besonders durch die duktilen Eigenschaften der genannten Metalle begünstigt.

Eine Möglichkeit die dritte Schicht mit der zweiten Schicht zu verbinden ist dadurch gegeben, dass die dritte Schicht in die zweite Schicht eingedrückt ist. Alternativ kann die dritte Schicht auch in die zweite Schicht eingeschmolzen sein. Dadurch kann die dritte Schicht zeitnah nach dem Extrudieren der zweiten Schicht angeordnet werden. Dies kann entweder vor dem teilweisen Erstarren der Schmelze für die zweite Schicht geschehen, was zu einem Einschmelzen führt, oder nach einem teilweisen Erstarren, was zu einem Eindrücken führt.

Die dritte Schicht kann als kontinuierliche oder teilweise durchbrochene Schicht ausgeführt sein. Insbesondere als durchbrochene Schicht, beispielsweise als Netz, Lochblech, Fasern, Gewebe, Geflecht, Gewirke etc. oder spiralförmige Schicht kann die dritte Schicht durch das zuvor genannte Eindrücken oder Einschmelzen effektiv mit der zweiten Schicht verbunden werden.

Eine weitere Ausführungsform ist dadurch gekennzeichnet, dass eine vierte Schicht als äußere Deckkunststoffschicht, Lackschicht oder Coating vorgesehen ist. Somit können die innerhalb der vierten Schicht angeordneten Schichten vor Beschädigungen oder sonstigen äußeren Einwirkungen, wie beispielsweise UV-Strahlung geschützt werden. Des Weiteren kann so das Äußere des Verbundrohres auf die umgebungsbedingten Anforderungen durch die vierte Schicht, also unabhängig von den anderen Schichten, abgestimmt werden.

Das Verbinden verschiedener Schichten kann zudem auch dadurch erreicht werden, dass zwischen mindestens zwei Schichten mindestens eine Haftvermittlerschicht angeordnet ist. Dadurch kann die Verbindung zweier Schichten besonders exakt und dauerhaft definiert werden.

Im Folgenden wird die Erfindung anhand spezieller Ausführungsbeispiele mit Bezug auf die beigefügte Zeichnung näher erläutert. In der Zeichnung zeigen
- Fig. 1: ein erfindungsgemäßes Verbundrohr,
- Fig. 2: eine weitere Ausführungsform eines erfindungsgemäßen Verbundrohres und
- Fig. 3: ein gebogenes Verbundrohr ohne und mit verformbarer Schicht.

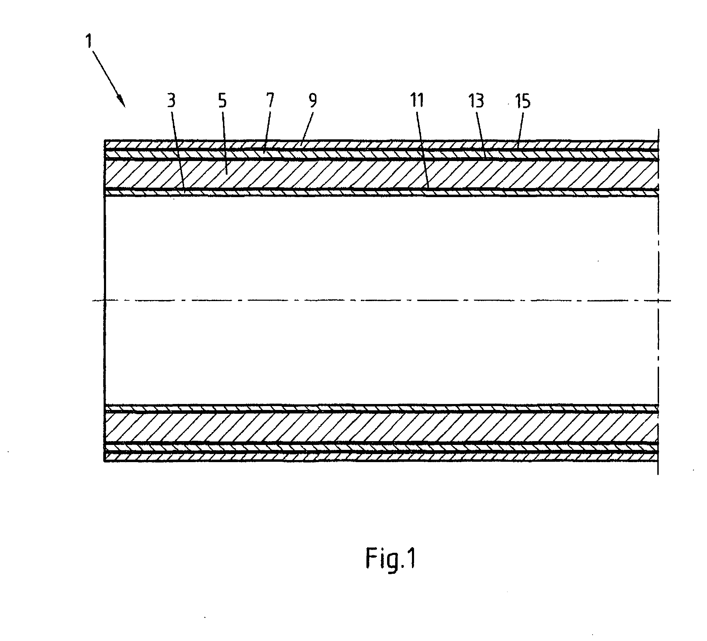

Fig. 1 zeigt ein erfindungsgemäßes Verbundrohr 1, mit vier Schichten, wobei die innere erste Schicht 3 eine inerte Schicht ist und wobei die zweite Schicht 5 außerhalb der ersten Schicht 3 angeordnet ist.

Erfindungsgemäß ist das frühzeitige Knicken des Verbundrohres 1 nun dadurch verhindert, dass eine dritte verformbare Schicht 7 vorgesehen ist und dass die dritte Schicht 7 außerhalb der ersten Schicht 3 angeordnet ist und mit der zweiten Schicht 5 verbunden ist.

Die in Fig. 1 gezeigte erste Schicht 3 ist gemäß einer Variante, die nicht im Rahmen der Erfindung liegt, aus einem Metall hergestellt, wobei es sich um ein 0,1 mm Wanddicke aufweisendes Edelstahlrohr handelt.

Erfindungsgemäß ist die erste Schicht 3 allerdings aus PSU oder PPSU hergestellt.

Bei dem in Fig. 1 gezeigten Ausführungsbeispiel ist die zweite Schicht 5 aus einem Kunststoff, erfindungsgemäß aus PE, PERT, PEX, PP, PB, PA oder PVC in ungefüllter, gefüllter oder bewehrter Form hergestellt.

Die dritte Schicht 7 ist bei dem in Fig. 1 gezeigten Beispiel aus einem Metall, insbesondere Al, Stahl oder Kupfer hergestellt.

Das zuvor beschriebene erfindungsgemäße Verbundrohr 1 kann zusätzlich zu den zuvor genannten drei Schichten eine in Fig. 1 dargestellte vierte Schicht 9 aufweisen, die als äußere Deckkunststoffschicht dient.

Zur Verbindung der verschiedenen Schichten dienen bei dem in Fig. 1 gezeigten Verbundrohr 1 zwischen den Schichten 3 und 5 sowie 5 und 7 und ebenfalls zwischen den Schichten 7 und 9 jeweils eine Haftvermittlerschicht 11, 13 und 15.

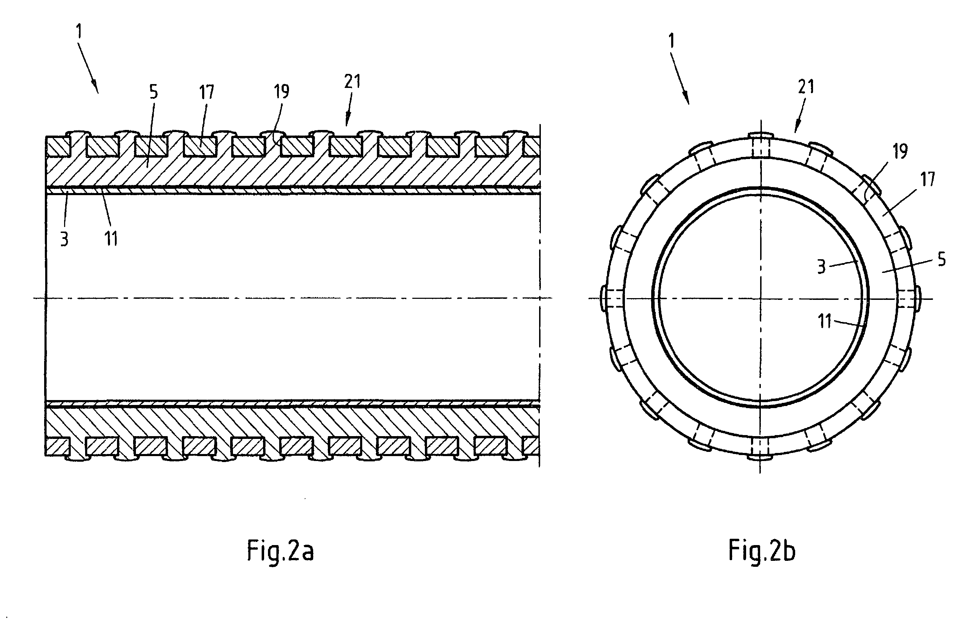

Fig. 2a zeigt eine alternative Ausführungsform. Zunächst ist, wie in dem zuvor genannten Ausführungsbeispiel, eine erste innere inerte Schicht 3 sowie eine zweite Schicht 5 gezeigt. Die beiden Schichten 3 und 5 sind mit einer Haftvermittlerschicht 11 verbunden. Eine dritte Schicht 17 ist in Fig. 2a als teilweise durchbrochene Schicht gezeigt. Die dritte Schicht 17 ist netzförmig ausgeführt und weist Öffnungen 19 auf.

Bei dem in Fig. 2 gezeigten Beispiel greift die zweite Schicht 5 durch die Öffnungen 19 bis auf die Außenseite 21 der dritten Schicht 17 durch. Dadurch ist eine effiziente Verbindung der zweiten Schicht 5 und der dritten Schicht 17 gegeben. Die Schicht 17 kann auch ganz von der Schicht 5 umschlossen sein, entweder durch Versenken der Schicht 17 in der Schmelze von Schicht 5 oder durch zwei separate Extrusionsvorgänge mit dem gleichen Material, zwischen denen die Armierungsschicht 17 eingebracht wird.

Fig. 2b verdeutlicht die beispielhafte Verteilung der Öffnungen 19 am Umfang des Verbundrohres 1 sowie das Durchgreifen der Schicht 5 auf die Außenseite der Schicht 17.

Ein solches Durchgreifen kann insbesondere dadurch erreicht werden, dass die dritte Schicht 17 in die zweite Schicht 5 eingeschmolzen ist. Besonders vorteilhaft kann dafür der nicht erstarrte Zustand der Schicht 5, beispielsweise im Anschluss an einen Extrudierprozess genutzt werden.

Eine weitere Möglichkeit ist, dass die dritte Schicht 17 in die zweite Schicht 5 eingedrückt ist. Je nach Anforderung und Herstellungsprozess stehen somit mehrere Alternativen zur Verbindung der Schichten zur Auswahl. Selbstverständlich können auch andere Ausgestaltungen der Schicht 17, beispielsweise eine spiralförmige Ausgestaltung und andere Verbindungsvarianten zwischen zwei Schichten gewählt werden.

Des Weiteren besteht die Möglichkeit, dass die Schicht 17 im Vorfeld mit einem auf das Material, aus dem die Schicht 5 besteht, abgestimmten Primer zu behandeln, so dass die Haftung zwischen der Schicht 5 und der Schicht 17 durch einen Form- und einen Kraftschluss definiert ist.

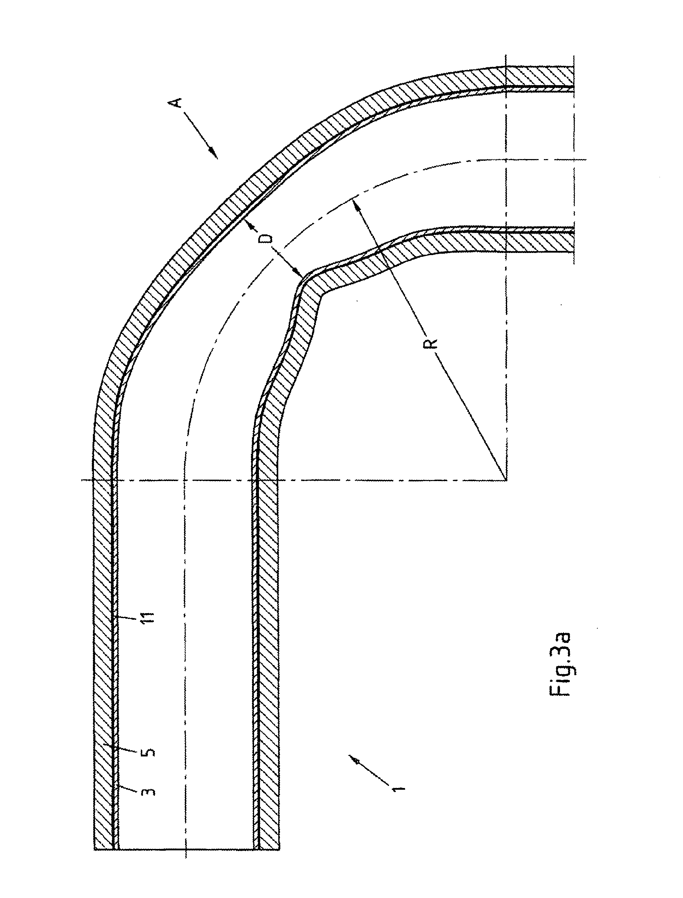

In Fig. 3a ist ein Verbundrohr 1 des Standes der Technik gezeigt. Es weist eine inerte Schicht 3 sowie eine Kunststoffschicht 5 auf, die mit einer Haftvermittlerschicht 11 verbunden sind. Bei einer Biegung des Verbundrohres 1 mit dem Biegeradius R erfahren die Teile des Verbundrohres 1, die innerhalb des Biegeradius R liegen eine Druckspannung, die Teile des Verbundrohres 1 außerhalb des Biegeradius R eine Zugspannung. Da sich die Schichten 3 und 5 nicht plastisch verformen können und sich somit nicht verlängern bzw. verkürzen können, die Spannungen aber auch nicht durch Gegenkräfte gehalten werden können, muss sich das Verbundrohr 1 an der Stelle A verformen. Dies führt zu einer Knickung an der Stelle A. Die Schichten 3 und 5 befinden sich dann in einem spannungsfreien Zustand, der durch das Knicken der Schichten erreicht wird. Dies führt zu einer Verengung des Durchmessers D des Verbundrohres 1 an der Knickstelle A.

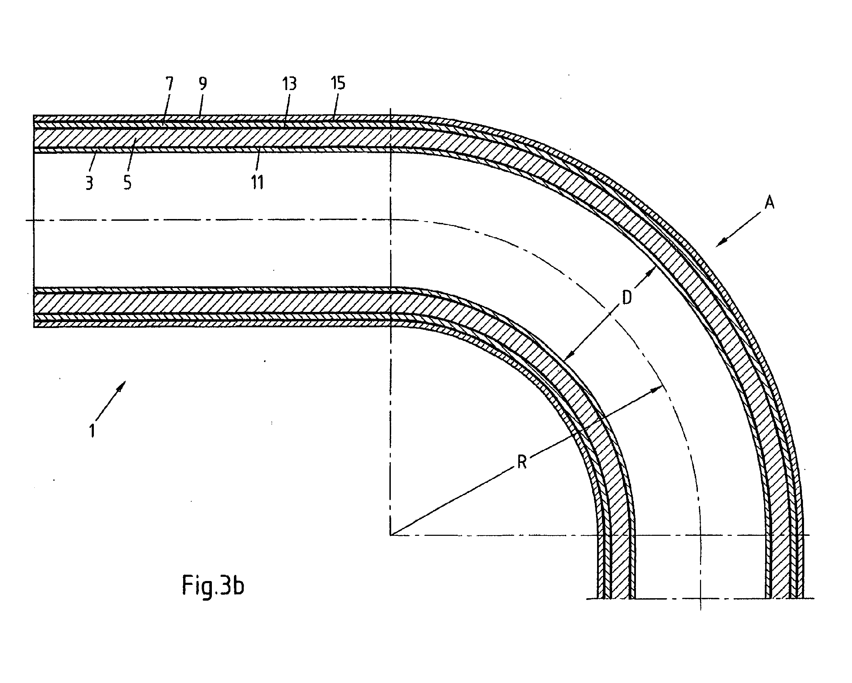

In Fig. 3b ist ein erfindungsgemäßes Verbundrohr 1 gezeigt. Es weist eine inerte Schicht 3, eine Kunststoffschicht 5, eine verformbare Schicht 7 und eine Deckschicht 9 auf. Die Schichten sind mit Haftvermittlerschichten 11, 13 und 15 verbunden. Bei einer Biegung des in Fig. 3b gezeigten Verbundrohres 1 mit dem Biegeradius R werden wiederum die innerhalb des Radius R liegenden Teile des Verbundrohres 1 mit einer Druckspannung beaufschlagt, die außerhalb des Biegeradius R liegenden Teile mit einer Zugspannung beaufschlagt.

Die verformbare Schicht 7 wird durch die Spannungen plastisch verformt und befindet sich danach in einem spannungsfreien Zustand. Außerhalb des Biegeradius R verlängert sich die verformbare Schicht 7, innerhalb verkürzt sie sich. In ihrem Umfang behält die verformbare Schicht 7 die Form bei. Die weiteren, sich verspannenden Schichten 3, 5 und 9 des Rohres werden durch die Verbindung zur verformbaren Schicht 7 gestützt. Eine Knickung an der Stelle A des Verbundrohres findet nicht statt. Eine Verengung des Durchmessers D wird weitestgehend ausgeschlossen.

Selbstverständlich ist ein erfindungsgemäßes Verbundrohr nicht auf die zuvor genannten Ausführungsbeispiele beschränkt. Insbesondere können weitere Schichten, beispielsweise zur Isolierung und/oder Erhöhung der Widerstandsfähigkeit in beispielsweise chemisch aggressiven Umgebungen vorgesehen sein.

Durch geeignete Materialkombinationen kann zudem ein teilweiser oder vollständiger Verzicht auf Haftvermittlerschichten erreicht werden.

## Patentansprüche

1. Verbundrohr,
- mit mindestens zwei Schichten,
- wobei die innere erste Schicht (3) eine inerte Schicht ist,
- wobei die zweite Schicht (5) außerhalb der ersten Schicht (3) angeordnet ist,
- wobei eine dritte verformbare Schicht (7) vorgesehen ist und
- wobei die dritte Schicht (7) außerhalb der ersten Schicht (3) angeordnet ist und mit der zweiten Schicht (5) verbunden ist,
**dadurch gekennzeichnet,**
- **dass** die erste Schicht (3) aus PSU (Polysulfon) oder PPSU (Polyphenylsulfon) hergestellt ist
- und **dass** die zweite Schicht (5) aus PE, PERT, PEX, PP, PS, PA oder PVC in ungefüllter, gefüllter oder bewehrter Form hergestellt ist.

2. Verbundrohr nach Anspruch 1,
**dadurch gekennzeichnet,**
**dass** die dritte Schicht (7) aus einem Metall, insbesondere A1, Stahl oder Kupfer hergestellt ist.

3. Verbundrohr nach Anspruch 1 oder 2,
**dadurch gekennzeichnet,**
**dass** die dritte Schicht (7) in die zweite Schicht (5) eingedrückt ist.

4. Verbundrohr nach Anspruch 1 oder 2,
**dadurch gekennzeichnet,**
**dass** die dritte Schicht (7) in die zweite Schicht (5) eingeschmolzen ist.

5. Verbundrohr nach einem der Ansprüche 1 bis 4,
**dadurch gekennzeichnet,**
**dass** die dritte Schicht (7) eine kontinuierliche oder teilweise durchbrochene Schicht (17) ist, insbesondere Fasern, ein Gewebe, ein Geflecht oder ein Gewirke aufweiset.

6. Verbundrohr nach einem der Ansprüche 1 bis 5,
**dadurch gekennzeichnet,**
**dass** eine vierte Schicht (9) als äußere Deckkunststoffschicht, Lackschicht oder Coating vorgesehen ist.

7. Verbundrohr nach einem der Ansprüche 1 bis 6,
**dadurch gekennzeichnet,**
**dass** zwischen mindestens zwei Schichten mindestens eine Haftvermittlerschicht (11,13,15) angeordnet ist.

8. Verwendung eines Verbundrohres nach einem der Ansprüche 1 bis 7 als Trinkwasserleitung.

## Claims

1. Composite pipe,
- having at least two layers,
- wherein the inner first layer (3) is an inert layer,
- wherein the second layer (5) is arranged outside the first layer (3),
- wherein a third deformable layer (7) is provided, and
- wherein the third layer (7) is arranged outside the first layer (3) and is joined to the second layer (5), **characterised in that**
- the first layer (3) is produced from PSU (polysulphone) or PPSU (polyphenylsulphone),
- and **in that** the second layer (5) is produced from PE, PERT, PEX, PP, PB, PA or PVC in unfilled, filled or reinforced form.

2. Composite pipe according to Claim 1, **characterised in that** the third layer (7) is produced from a metal, in particular aluminium, steel or copper.

3. Composite pipe according to Claim 1 or 2, **characterised in that** the third layer (7) is pressed into the second layer (5).

4. Composite pipe according to Claim 1 or 2, **characterised in that** the third layer (7) is fused into the second layer (5).

5. Composite pipe according to any one of Claims 1 to 4, **characterised in that** the third layer (7) is a continuous or partly broken layer (17) and comprises, in particular, fibres, a mesh, a netting or a knitted mesh.

6. Composite pipe according to any one of Claims 1 to 5, **characterised in that** a fourth layer (9) is provided as an outer covering plastic layer, lacquer coat or coating.

7. Composite pipe according to any one of Claims 1 to 6, **characterised in that** at least one adhesive layer (11, 13, 15) is arranged between at least two layers.

8. Use of a composite pipe, according to any one of Claims 1 to 7, as a drinking water pipe.

## Revendications

1. Tube composite
- avec au moins deux couches,
- sachant que la première couche intérieure(3) est une couche inerte,
- sachant que la deuxième couche (5) est disposée à l'extérieur de la première couche (3),
- sachant qu'une troisième couche déformable (7) est prévue, et
- sachant que la troisième couche (7) est disposée à l'extérieur de la première couche (3) et est reliée à la deuxième couche (5),
**caractérisé en ce que**
- la première couche (3) est fabriquée en PSU (poly sulfone) ou en PPSU (polysulfone de phénylène) et
- la deuxième couche (5) est fabriquée en PE, PERT, PEX, PP, PB, PA ou en PVC, de forme non remplie, remplie, ou armée.

2. Tube composite selon la revendication 1, **caractérisé en ce que** la troisième couche (7) est fabriquée en métal, en particulier en aluminium, en acier ou en cuivre.

3. Tube composite selon revendication 1 ou 2, **caractérisé en ce que** la troisième couche (7) est pressée dans la deuxième couche (5).

4. Tube composite selon revendication 1 ou 2, **caractérisé en ce que** la troisième couche (7) est fondue dans la deuxième couche (5).

5. Tube composite selon l'une des revendications 1 à 4, **caractérisé en ce que** la troisième couche (8) est une couche continue ou partiellement interrompue (17), qu'elle présente en particulier des fibres, un tissu, une tresse ou un tissu à mailles.

6. Tube composite selon l'une des revendications 1 à 5, **caractérisé en ce qu'**une quatrième couche (9) est prévue en tant que couche de recouvrement en matière plastique, couche de laque ou coating.

7. Tube composite selon l'une des revendications 1 à 6, **caractérisé en ce que**, entre au moins deux couches, est disposée au moins une couche de promotion d'adhérence (11, 13, 15).

8. Utilisation d'un tube composite selon l'une des revendications 1 à 7 en tant que conduite d'eau potable.
